(19) **Europäisches Patentamt**
**European Patent Office**
**Office européen des brevets**

(11) **EP 4 629 173 A1**

(12) **EUROPÄISCHE PATENTANMELDUNG**

(43) Veröffentlichungstag:
08.10.2025 Patentblatt 2025/41

(21) Anmeldenummer: 24168202.0

(22) Anmeldetag: 03.04.2024

(51) Internationale Patentklassifikation (IPC):
**G06T 7/62** *(2017.01)* **G06T 7/00** *(2017.01)*

(52) Gemeinsame Patentklassifikation (CPC):
**G06T 7/62;** G06T 7/0004; G06T 2207/10028;
G06T 2207/20084; G06T 2207/30108

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Primetals Technologies Austria GmbH**
**4031 Linz (AT)**

(72) Erfinder:
• **Chromy, Markus**
**4062 Thening (AT)**
• **Fischer, Paul**
**4048 Puchenau (AT)**

(74) Vertreter: **Metals@Linz**
**Primetals Technologies Austria GmbH**
**Intellectual Property Upstream IP UP**
**Turmstraße 44**
**4031 Linz (AT)**

(54) **VORRICHTUNG UND VERFAHREN ZUR SCHÜTTGUTANALYSE SOWIE SCHÜTTGUTPRODUKTIONSSYSTEM**

(57)   Die Erfindung betrifft ein Verfahren (100) und eine Vorrichtung (20) zur Schüttgutanalyse sowie ein Schüttgutproduktionssystem (10) und ein Computerprogrammprodukt. Erfindungsgemäß werden in einem 3D-Datensatz (14) einzelne Schüttgutkörper (16) eines Schüttguts (12) identifiziert (S2). Für jeden identifizierten Schüttgutkörper (16) wird eine Ausgleichsrechnung durchgeführt (S3), bei welcher der Schüttgutkörper (16) auf Grundlage von dem Schüttgutkörper (16) zugeordneten Daten (D) aus dem 3D-Datensatz (14) rekonstruiert wird. Auf Grundlage von jeweils wenigstens einem bei den Ausgleichsrechnungen erhaltenen Parameterwert, der den jeweiligen identifizierten Schüttgutkörper (16) charakterisiert, wird dann eine Schüttgutcharakteristik (C) ermittelt (S4).

**FIG 1**

EP 4 629 173 A1

**Beschreibung**

Gebiet der Technik

Die Erfindung betrifft ein Verfahren und eine Vorrichtung zur Schüttgutanalyse sowie ein Schüttgutproduktionssystem und ein Computerprogrammprodukt.

Stand der Technik

Bei der Erzeugung von Schüttgut wie etwa Pellets aus einer Vielzahl an einzelnen, auch als "Korn" bezeichneten Schüttgutkörpern ist üblicherweise ein hoher Grad an Homogenität gewünscht. Dies betrifft vor allem die Form und/oder die Größe der Schüttgutkörper.

Beispielsweise können hinsichtlich der Größenverteilung hohe Anforderungen an in Direktreduktionsöfen eingesetzte Metallerzpellets bestehen. Zu große oder zu kleine Pellets sind für den Direktreduktionsprozess nicht geeignet. Zu große Pellets können zu einer schlechten metallurgischen Reduktion führen, während zu kleine Pellets den Gasstrom durch den Ofen negativ beeinflussen können. Deshalb sollte bereits bei der Pelletproduktion eine Größenverteilung der Pellets erzielt werden, die möglichst ideal auf den darauffolgenden (Reduktions-)Prozess abgestimmt ist.

Es ist daher oftmals unerlässlich, eine Ermittlung der Größenverteilung von Schüttgutkörpern im Schüttgut vorzunehmen, welche Aufschluss über den Grad der Homogenität bzw. die Abweichung von einem angestrebten Homogenitätsgrad geben kann.

Eine Möglichkeit, eine solche Größenverteilung zu ermitteln, ist die sogenannte Siebanalyse. Dabei wird das Schüttgut über Siebe mit unterschiedlicher Maschenweite gesiebt. Die unterschiedlichen Größenfraktionen können dann entsprechend quantifiziert werden. Die Siebanalyse ist folglich eine mechanische Analyse. Eine derartige Siebanalyse ist zwar robust, allerdings aufwändig und zeitintensiv.

Als Alternative zu solchen mechanischen Analysen können Größenverteilungen auch durch extraktive Methoden für Laboruntersuchungen oder in-line-Analysemethoden ermittelt werden. Es ist beispielsweise bekannt, Bilder des Schüttguts mittels Verfahren zur digitalen, d.h. computergestützten, Bildverarbeitung auszuwerten. Dabei werden mittels entsprechender Algorithmen die einzelnen Schüttgutkörper im Bild erkannt. Die von den erkannten Schüttgutkörpern im Bild eingenommene Fläche kann dann einen Hinweis auf die Größe dieser Schüttgutkörper liefern.

Allerdings sind auch derartige, auf einer Bildanalyse beruhende Analyseverfahren problembehaftet. Beispielsweise können teilweise verdeckte Schüttgutkörper die Größenverteilung verfälschen. Zudem ist es, insbesondere bei schlechten Lichtverhältnissen und dem damit verbundenen niedrigen Kontrast, oftmals schwierig, die einzelnen Schüttgutkörper im Bild überhaupt zuverlässig identifizieren zu können. Dies trifft insbesondere zu, wenn eine solche Schüttgutanalyse nicht im Labor, sondern in einer industriellen Umgebung, zum Beispiel in einer Produktionsstätte, erfolgen soll.

Vor diesem Hintergrund ist es eine Aufgabe der vorliegenden Erfindung, die Schüttgutanalyse zu verbessern, insbesondere eine robuste und gleichzeitig aufwandsarme Charakterisierung von Schüttgut zu ermöglichen.

Diese Aufgabe wird gelöst durch das Verfahren und die Vorrichtung zur Schüttgutanalyse sowie das Schüttgutproduktionssystem und das Computerprogrammprodukt gemäß den unabhängigen Ansprüchen.

Bevorzugte Ausführungsformen sind Gegenstand der abhängigen Ansprüche sowie der folgenden Beschreibung.

Zusammenfassung der Erfindung

Gemäß einem ersten Aspekt der Erfindung werden bei dem, insbesondere computerimplementierten, Verfahren zur Schüttgutanalyse, insbesondere zur Analyse von Metallerzpellets für Direktreduktionsöfen, in einem 3D-Datensatz einzelne Schüttgutkörper eines Schüttguts identifiziert. Für jeden identifizierten Schüttgutkörper wird eine Ausgleichsrechnung durchgeführt, bei welcher der Schüttgutkörper auf Grundlage von dem Schüttgutkörper zugeordneten Daten aus dem 3D-Datensatz, insbesondere virtuell, insbesondere dreidimensional, rekonstruiert wird. Auf Grundlage von jeweils wenigstens einem bei den Ausgleichsrechnungen erhaltenen Parameterwert, der den jeweiligen identifizierten Schüttgutkörper charakterisiert, wird dann eine Schüttgutcharakteristik ermittelt.

Ein 3D-Datensatz im Sinne der vorliegenden Erfindung ist vorzugsweise ein Datensatz, der eine 3D-Information enthält. Ein 3D-Datensatz kann auch als räumlicher Datensatz bezeichnet werden. Der 3D-Datensatz kann zum Beispiel eine räumliche Anordnung der Schüttgutkörper und/oder eine räumliche Ausprägung der Schüttgutkörper, d. h. deren Plastizität bzw. dreidimensionale Form, charakterisieren. Zweckmäßigerweise enthält der 3D-Datensatz diskrete Werte kartesischer Koordinaten, d. h. XYZ-Koordinaten, die zumindest Teile von Schüttgutkörpern, etwa Oberflächenabschnitte, charakterisieren. Bevorzugt repräsentiert der 3D-Datensatz eine dreidimensionale Punktwolke, wobei jeder Datenpunkt eine Oberfläche eines Objekts, zum Beispiel eines Schüttgutkörpers, abbildet. Ein 3D-Datensatz kann beispielsweise aus einer Vielzahl von Höhenprofilen gebildet sein.

Eine Schüttgutcharakteristik im Sinne der Erfindung ist vorzugsweise eine Beschreibung des Schüttguts durch eine oder mehrere Größen. Eine Schüttgutcharakteristik kann beispielsweise eine Verteilung von Parameterwerten eines Parameters, die einzelne Schüttgutkörper charakterisieren, etwa eine Größenverteilung der Schüttgutkörper, enthalten. Es ist aber auch denkbar, dass eine Schüttgutcharakteristik durch einen einzelnen Parameterwert, etwa eine mittlere Größe der Schüttgutkörper, gegeben ist.

Ein Aspekt der Erfindung beruht auf dem Ansatz, 3D-Information zu einem Schüttgut, zum Beispiel Metallerzpellets für Direktreduktionsöfen, auszuwerten, um Eigenschaften des Schüttguts zu ermitteln. Zweckmäßigerweise wird hierzu ein 3D-Datensatz bereitgestellt, wie er beispielsweise aus einer dreidimensionalen Erfassung des Schüttguts resultieren kann. Im Unterschied zu konventionellen Verfahren, in denen lediglich zweidimensionale Bilder des Schüttguts - effektiv also Projektionen des Schüttguts in einer Ebene - analysiert werden, kann bei dem vorgeschlagenen Verfahren auf zusätzliche Information bezüglich der dritten Dimension zurückgegriffen werden, zum Beispiel auf Höhenprofile. Neben einer Identifikation von einzelnen Schüttgutkörpern in dem 3D-Datensatz kann infolgedessen eine Ausgleichsrechnung durchgeführt werden, bei der die einzelnen Schüttgutkörper virtuell rekonstruiert, d. h. virtuell nachgebildet werden. Da für die Rekonstruktion Daten aus dem 3D-Datensatz verwendet werden, die den jeweiligen Schüttgutkörpern zugeordnet sind, kann insbesondere eine dreidimensionale Rekonstruktion erfolgen. Zweckmäßigerweise liefert diese virtuelle Rekonstruktion wenigstens einen Parameterwert, welcher zur Charakterisierung des entsprechenden (realen) Schüttgutkörpers herangezogen werden kann. Eine Vielzahl solcher Parameterwerte erlaubt dann die Ermittlung einer Schüttgutcharakteristik. Beispielsweise können die im Rahmen der Ausgleichsrechnung ermittelten Parameterwerte statistisch ausgewertet werden. Hierbei ist gegenüber konventionellen Analyseverfahren vorteilhaft, dass mithilfe der Ausgleichsrechnung auch bei teilweise verdeckten Schüttgutkörpern genug (3D-) Daten vorliegen können, um eine robuste (dreidimensionale) Rekonstruktion bzw. Nachbildung des Schüttgutkörpers zu ermöglichen. Daher kann auch bei schlechter Vereinzelung eine größere Anzahl an Schüttgutkörper pro Datensatz korrekt "vermessen" und dadurch eine repräsentative Schüttgutcharakteristik ermittelt werden.

Vorzugsweise wird die derart ermittelte Schüttgutcharakteristik zur weiteren Verwendung ausgegeben, etwa über eine Schnittstelle. Beispielsweise kann die Schüttgutcharakteristik an ein Steuerungsprogramm ausgegeben und so einer Anlagensteuerung zugrunde gelegt werden. Alternativ oder zusätzlich kann die Schüttgutcharakteristik aber auch an einen Benutzer ausgegeben, zum Beispiel auf einem Display angezeigt, werden.

Üblicherweise können die einzelnen Schüttgutkörper eines Schüttguts zumindest zum überwiegenden Teil als im Wesentlichen kugelförmig, d. h. zumindest annähernd sphärisch, angenommen werden. Im Rahmen der Ausgleichsrechnung können aus diesen Daten dann beispielsweise Kugeln rekonstruiert werden, deren (virtueller) Radius oder Durchmesser dann den entsprechenden Schüttgutkörpern zuordenbar ist. Die den identifizierten Schüttgutkörpern jeweils zugeordneten Daten aus dem 3D-Datensatz können somit beispielsweise eine Kugelkappe des jeweiligen Schüttgutkörpers charakterisieren.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

Ein mögliches Vorgehen zur Rekonstruktion der identifizierten Schüttgutkörper auf Grundlage der ihnen zugeordneten Daten aus dem 3D-Datensatz besteht darin, im Rahmen der Ausgleichsrechnung einen, insbesondere vorbestimmten, geometrischen Körper an diese Daten anzupassen. Dieser geometrische Körper stellt zweckmäßigerweise ein, insbesondere dreidimensionales, Modell der Schüttgutkörper dar. Im Rahmen der Ausgleichsrechnung kann dann beispielsweise die Größe dieses geometrischen Körpers an die dem jeweiligen Schüttgutkörper zugeordneten Daten angepasst werden. Die benötigte Rechenleistung zum Anpassen eines, insbesondere vorbestimmten, geometrischen Körpers an Daten aus dem 3D-Datensatz ist dabei üblicherweise überschaubar. Zudem kann so bereits mit wenigen Daten ein Schüttgutkörper zuverlässig und robust rekonstruiert werden. Beispielsweise können bereits 50 Datenpunkte, die mit einer Oberfläche des Schüttgutkörpers korrespondieren, für eine zuverlässige und robuste Rekonstruktion ausreichen.

Das Anpassen eines vorgegebenen geometrischen Körpers an den jeweiligen Schüttgutkörper zugeordneten Daten aus dem 3D-Datensatz kann auch als "anfitten" des geometrischen Körpers an die Daten verstanden werden. Anders gesagt werden die dem jeweiligen Schüttgutkörper zugeordneten Daten bei der Ausgleichsrechnung zweckmäßigerweise gefittet, z. B. mit einem Modell des Schüttgutkörpers, um wenigstens einen den Schüttgutkörper charakterisierenden Parameterwert, etwa dessen Durchmesser oder Radius, ermitteln zu können.

Da die einzelnen Schüttgutkörper eines Schüttguts, wie oben bereits angemerkt, üblicherweise zumindest annähernd - d. h. im Rahmen einer ersten Näherung - sphärisch sind bzw. als sphärisch angenommen werden können, ist es zweckmäßig, im Rahmen der Ausgleichsrechnung einen sphärischen Körper, d. h. eine Kugel, an die dem jeweiligen Schüttgutkörper zugeordneten Daten anzupassen. Im Rahmen der Ausgleichsrechnung können infolgedessen z. B. vier Parameterwerte ermittelt werden, nämlich die Lage des Mittelpunkts des sphärischen Körpers, etwa eine X-, eine Y-, und eine Z-Koordinate, und dessen Radius oder Durchmesser. Der so ermittelte, d. h. an die jeweiligen Daten angepasste, Radius oder Durchmesser kann dann dem entsprechenden realen Schüttgutkörper als charakterisierender Parameterwert zugeordnet werden.

Gegebenenfalls kann es hilfreich und/oder für die Charakterisierung des Schüttguts von Vorteil sein, mögliche Abweichungen von der angenommenen sphärischen Form zu ermitteln. Vorzugsweise wird hierzu ein den Schüttgutkörper charakterisierender Parameterwert auf der Grundlage einer Vielzahl von Fehlern ermittelt, die für die dem Schüttgutkörper zugeordneten Daten aus dem 3D-Datensatz, insbesondere für jeden dem Schüttgutkörper zugeordneten Datenpunkt, im Rahmen der Ausgleichsrechnung ermittelt werden. Dabei kann insbesondere eine räumliche Verteilung der Fehler berücksichtigt werden. So lässt sich beispielsweise ermitteln, wie homogen der Fit des geometrischen Körpers an die Daten ist bzw. wie stark der Fit lokal von den Daten abweicht. Es kann so auf eine Unrundheit des Schüttgutkörpers geschlossen werden. D. h., als ein den Schüttgutkörper charakterisierender Parameterwert kann so eine Unrundheit ermittelt werden.

Die Fehler können beispielsweise eine Abweichung der Rekonstruktion vom eigentlichen Schüttgutkörper abbilden. Die Fehler können also beispielsweise ein Maß für die Abweichung der einzelnen Daten bzw. Datenpunkte zum angepassten, d. h. gefitteten, geometrischen Körper sein. Entspricht der betrachtete Schüttgutkörper im Wesentlichen genau dem geometrischen Körper, werden die ermittelten Fehler in Bezug auf ihre räumliche Verteilung im Wesentlichen ein Rauschen darstellen. D. h., die Fehler sind räumlich unkorreliert bzw. homogen über die Oberfläche des (virtuellen) Körpers verteilt. Diese Homogenität der räumlichen Fehlerverteilung löst sich jedoch auf, wenn die Form des Schüttgutkörpers zumindest abschnittsweise nicht dem geometrischen Körper entspricht.

Daher ist es beispielsweise denkbar, die Fehler zu gruppieren, d. h. in Gruppen zusammenzufassen. Dabei kann jede Fehlergruppe ein Hinweis auf eine lokale Abweichung eines Schüttgutkörperabschnitts vom geometrischen Körper liefern. Es ist dazu zweckmäßig, dass die Fehler auf Grundlage einer räumlichen Korrelation gruppiert werden und der den Schüttgutkörper charakterisierende Parameterwert auf der Grundlage dieser Fehlergruppierung ermittelt wird. Anhand der Fehlergruppen können beispielsweise Aus- oder Einbuchtungen identifiziert werden.

Alternativ oder zusätzlich können die dem jeweiligen Schüttgutkörper zugeordneten Daten in mehrere Datensets aufgeteilt werden. Aus den Fehlern, die im Rahmen der Ausgleichsrechnung im Zusammenhang mit den mehreren Datensets ermittelt werden, kann dann ein den Schüttgutkörper charakterisierender Parameterwert ermittelt werden. Beispielsweise lässt sich ein solcher Parameterwert aus mehreren Fehlern ermitteln, die sich beim Rekonstruieren des Schüttgutkörpers ergeben und Abweichungen der Rekonstruktion von den Daten aus den mehreren Datensets abbilden. Für jedes Datenset kann infolgedessen ein Maß für die Übereinstimmung mit dem (virtuellen) rekonstruierten Körper ermittelt werden. Zum Beispiel kann ermittelt werden, wie gut die Datenpunkte aus den verschiedenen Datensets auf der Oberfläche des (virtuellen) rekonstruierten Körpers liegen. Zweckmäßigerweise wird dabei für jedes Datenset ein mittlerer Fehler ermittelt.

Vorzugsweise wird ein Verhältnis der, insbesondere mittleren, Fehler zueinander ermittelt und daraus der den Schüttgutkörper charakterisierende Parameterwert abgeleitet. Dadurch kann nicht nur die Güte der Schüttgutkörper-Rekonstruktion bzw. der Ausgleichsrechnung überprüft, sondern auch eine Unrundheit der Schüttgutkörper bestimmt werden.

Die mehreren Datensets enthalten dabei zweckmäßigerweise jeweils Daten, die eine Kugelzone, d. h. die Oberfläche einer Kugelschicht, des Schüttgutkörpers abbilden. Bei kugelförmigen Schüttgutkörpern ist der sich bei der Rekonstruktion ergebende Fehler für alle Datensets gleich. Bei einer Abweichung von der Kugelform ist dagegen ein höherer Fehler für einige der Datensets zu erwarten. So kann schon die Aufteilung der Daten in zwei bis drei Datensets ausreichen, um die Unrundheit zuverlässig bestimmen zu können.

Eine effiziente Methode, um den jeweiligen Schüttgutkörper im Rahmen der Ausgleichsrechnung aus den ihm zugeordneten Daten zu rekonstruieren, beruht auf linearer Algebra. Demnach wird für die Ausgleichsrechnung vorzugsweise auf Grundlage der den jeweiligen Schüttgutkörper zugeordneten Daten eine Matrixgleichung aufgestellt und gelöst. Zweckmäßigerweise kann dann aus einem Lösungsvektor der Matrixgleichung wenigstens ein den jeweiligen Schüttgutkörper charakterisierender Parameterwert ermittelt werden, zum Beispiel dessen Radius oder Durchmesser. Die Matrixgleichung kann hierbei ein Gleichungssystem repräsentieren, dessen Anzahl an Unbekannten von dem als Modell für die Schüttgutkörper gewählten geometrischen Körper abhängt. Wird bei der Ausgleichsrechnung beispielsweise versucht, einen sphärischen Körper, d. h. eine Kugel, an die dem Schüttgutkörper zugeordneten Daten anzupassen bzw. anzufitten, kann das Gleichungssystem vier Unbekannte enthalten: drei kartesische Koordinaten für den Mittelpunkt und einen Radius oder Durchmesser.

Je nach Umfang der dem Schüttgutkörper zugeordneten Daten, zum Beispiel der Anzahl der entsprechenden Datenpunkte, ist das Gleichungssystem dabei überbestimmt. Es ist daher zweckmäßig, die Matrixgleichung durch die Methode der kleinsten (Fehler-) Quadrate zu lösen. Dies ist nicht nur günstig im Hinblick auf die benötigte Rechenleistung, sondern kann für jeden identifizierten Schüttgutkörper auch einen Fehler bzw. eine Güte für die bei der Ausgleichsrechnung erfolgende Rekonstruktion liefern. Diese Güte kann als charakterisierender Parameterwert ebenfalls eine Grundlage für die Ermittlung der Schüttgutcharakteristik bilden.

Ein für die Schüttgutanalyse geeigneter 3D-Datensatz kann mittels eines Profilsensors erzeugt werden, an dem das Schüttgut mit bekannter Geschwindigkeit vorbeibewegt wird. Infolgedessen lässt sich ein solcher 3D-Datensatz auf diese Weise überall dort erzeugen, wo ein kontinuierlicher Schüttgutstrom (ohnehin) vorhanden und/oder die Bewegungsgeschwindigkeit des Schüttguts ermittelbar bzw. bekannt ist. Beispielsweise kann also bereits auf einer Transportstrecke zwischen einer Vorrichtung zur Erzeugung der Schüttgutkörper und einer Sortiervorrichtung, bei der zu kleine und/oder zu große Schüttgutkörper aussortiert werden, eine solcher Datensatz erzeugt und die Schüttgutanalyse entsprechend durchgeführt werden.

Der Profilsensor weist hierbei vorzugsweise eine Kamera auf, die Verzerrungen einer mittels einer Projektionseinrichtung, z. B. eines Lasers, auf das Schüttgut projizierten Linie erfasst. Aus diesen Verzerrungen kann ein Höhenprofil abgeleitet werden. Ein derartiger Profilsensor kann das Schüttgut damit auch bei widrigen Umgebungsbedingungen, zum Beispiel schlechten Lichtverhältnissen, präzise erfassen. Mehrere solcher Höhenprofile, die aufeinanderfolgend während des Weitertransports des Schüttguts am Profilsensor vorbei, d. h. durch einen Erfassungsbereich des Profilsensors, insbesondere durch das Sichtfeld der Kamera, aufgezeichnet werden, bilden in bevorzugter Weise einen 3D-Datensatz. Dieser Datensatz bildet dann die Topologie des am Profilsensor vorbeibewegten Schüttguts ab.

Bei diesem Vorgehen kann es zu Abschattungen kommen, bei denen die Kamera zumindest Abschnitte der projizierten Laserlinie nicht erfassen kann. Folglich können solche Abschattungen zu "blinden Flecken" im 3D-Raum führen. Durch das Projizieren von mehreren Laserlinien und/oder dem Vorsehen mehrerer Kameras lässt sich dieser Effekt reduzieren.

Um eine *in* situ-Beurteilung der Produktion des Schüttguts, d. h. eine "online-Messung", vornehmen zu können, wird das Profil, insbesondere das Höhenprofil, des am Profilsensor vorbeibewegten Schüttguts im Wesentlichen kontinuierlich erfasst. Das Schüttgut kann dazu beispielsweise mit einer hohen Frequenz, etwa im Kilohertz-Bereich, erfasst werden. Insbesondere können die Verzerrungen der auf das Schüttgut projizierten Linie mit dieser hohen Frequenz erfasst werden. Mit der dadurch möglichen "lückenlosen" Erfassung des Schüttguts lässt sich die Schüttgutcharakteristik im Wesentlichen in Echtzeit ermitteln. Dies erlaubt insbesondere eine online-Überwachung der Güte des produzierten Schüttguts.

So ist es auch möglich, mehrere 3D-Datensätze hintereinander zu erzeugen. Diese Datensätze werden zweckmäßigerweise jeweils innerhalb eines vorbestimmten Zeitintervalls aufgenommen und haben entsprechend dieselbe Größe, was die Vergleichbarkeit erhöhen und die Auswertung erleichtern kann. Vorzugsweise werden sequenziell mehrere dieser jeweils innerhalb des vorbestimmten Zeitintervalls aufgenommenen 3D-Datensätze ausgewertet. Damit ist es möglich, eine Entwicklung der Schüttgutcharakteristik und infolgedessen auch den Produktionsprozess zu überwachen.

Eine besonders effektive Produktion von Schüttgut mit vorgegebenen Eigenschaften, zum Beispiel einer vorbestimmten mittleren Schüttgutkörper- bzw. Korngröße und/oder einer vorbestimmten Größenverteilung, kann realisiert werden, indem auf diese Entwicklung der Schüttgutcharakteristik zurückgegriffen wird. Beispielsweise können einzelne Produktionsparameter angepasst werden, wenn sich die Schüttgutcharakteristik ändert. Allgemein gesprochen wird vorzugsweise also ein Schüttgutproduktionsprozess auf Grundlage der ermittelten Schüttgutcharakteristik geregelt.

Gegebenenfalls können einzelne Verfahrensschritte auch KI-gestützt ausgeführt werden. Vorzugsweise wird insbesondere die Identifikation der einzelnen Schüttgutkörper mithilfe einer künstlichen Intelligenz durchgeführt. Es hat sich gezeigt, dass die Identifikation der Schüttgutkörper dadurch auch bei veränderlichen Umgebungsbedingungen zuverlässig erfolgen kann. Infolgedessen ist die KI-gestützte Identifikation der Schüttgutkörper besonders vorteilhaft für ein kontinuierlich laufendes System, bei dem Schüttgut entlang einer Förderstrecke gefördert und dabei analysiert werden soll.

Gemäß einem zweiten Aspekt der Erfindung weist eine Vorrichtung zur Schüttgutanalyse, insbesondere zur Analyse von Metallerzpellets für Direktreduktionsöfen, auf: i) ein Identifikationsmittel zur Identifikation einzelner Schüttgutkörper eines Schüttguts in einem 3D-Datensatz; ii) ein Rechenmittel zum Durchführen einer Ausgleichsrechnung für jeden identifizierten Schüttgutkörper, bei welcher der Schüttgutkörper auf Grundlage von dem Schüttgutkörper zugeordneten Daten aus dem 3D-Datensatz, insbesondere virtuell, insbesondere dreidimensional, rekonstruiert wird; und iii) ein Analysemittel zum Ermitteln einer Schüttgutcharakteristik auf Grundlage von jeweils wenigstens einem bei den Ausgleichsrechnungen erhaltenen Parameterwert, der den jeweiligen identifizierten Schüttgutkörper charakterisiert.

Dadurch, dass die Rekonstruktion der identifizierten Schüttgutkörper auf Daten aus einem 3D-Datensatz beruht, kann eine besonders robuste Ermittlung des wenigstens einen, den jeweiligen Schüttgutkörper charakterisierenden Parameterwerts erfolgen. Dabei ist eine solche Rekonstruktion sogar in solchen Fällen möglich, in denen die Daten aus dem 3D-Datensatz nicht vollständig sind, also den jeweiligen Schüttgutkörper nur abschnittsweise abbilden. Die Vorrichtung eignet sich daher besonders zur Schüttgutanalyse in solchen Fällen, in denen das Schüttgut nicht oder nur zu einem geringen Grad vereinzelt ist. Insbesondere kann mit einer solchen Vorrichtung eine Schüttgutanalyse auch während des Transports von auf einem Transportband aufgeschüttetem Schüttgut, etwa unmittelbar nach dessen Herstellung, erfolgen.

Ein Mittel im Sinne der vorliegenden Erfindung kann hard- und/oder softwaretechnisch ausgebildet sein. Das Mittel kann insbesondere eine, vorzugsweise mit einem Speicher- und/oder Bussystem daten- bzw. signalverbundene, Verarbeitungseinheit aufweisen. Beispielsweise kann das Mittel eine Mikroprozessoreinheit (CPU) oder ein Modul einer solchen und/oder ein oder mehrere Programme oder Programmmodule aufweisen. Das Mittel kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren verkörpert bzw. auszuführen imstande ist, sodass das Mittel die Schritte solcher Verfahren ausführen kann und damit insbesondere eine Schüttgutanalyse durchführen kann.

Gemäß einem dritten Aspekt der Erfindung weist das Schüttgutproduktionssystem, insbesondere ein System zur Produktion von Metallerzpellets für Direktreduktionsöfen, eine Vorrichtung gemäß dem zweiten Aspekt der Erfindung sowie eine Vorrichtung zur Schüttgutproduktion, insbesondere wenigstens einen Pelletierteller, auf. Das Schüttgutproduktionssystem kann auch einen Profilsensor zur Erfassung des produzierten Schüttguts, insbesondere zum Erfassen von Höhenprofilen des Schüttguts, aufweisen. Zweckmäßigerweise ist der Profilsensor im Bereich einer Fördervorrichtung zum Befördern des produzierten Schüttguts nach dessen Erzeugung, zum Beispiel von wenigstens einem Pelletierteller zu einer Sortiervorrichtung, angeordnet. Dadurch kann die Güte des erzeugten Schüttguts *in situ* bzw. online ermittelt und überwacht werden.

Ein vierter Aspekt der Erfindung betrifft ein Computerprogrammprodukt zur Durchführung des Verfahrens gemäß dem ersten Aspekt der Erfindung. Ein solches Computerprogrammprodukt kann beispielsweise auf einer Steuerungseinheit eines Schüttgutproduktionssystems ausgeführt werden. Das Computerprogrammprodukt enthält zweckmäßigerweise Befehle, die bei seiner Ausführung durch einen Computer, etwa eine Steuerungseinheit des Schüttgutproduktionssystems, diesen veranlassen, das Verfahren gemäß dem ersten Aspekt der Erfindung auszuführen.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

Fig 1    ein Beispiel eines Schüttgutproduktionssystems;

Fig 2A    ein Beispiel eines 3D-Datensatzs in einer zweidimensionalen Darstellung;

Fig 2B    in dem 3D-Datensatz aus Fig 2A identifizierte Schüttgutkörper;

Fig 3    ein Beispiel einer Ausgleichsrechnung, bei der ein Schüttgutkörper rekonstruiert wird;

Fig 4A    ein Beispiel von in mehrere Datensets aufgeteilten, einem Schüttgutkörper zugeordneten Daten aus einem 3D-Datensatz;

Fig 4B    die Daten aus Fig 4A in einer Seitenansicht;

Fig 5    ein Beispiel einer Schüttgutcharakteristik;

Fig. 6    ein Beispiel eines Verfahrens zur Schüttgutanalyse; und

Fig. 7    ein Beispiel einer Gruppierung von bei einer Ausgleichsrechnung zur Rekonstruktion eines Schüttgutkörpers erhaltenen Fehlern auf Grundlage einer räumlichen Korrelation.

Soweit zweckdienlich, werden in den Figuren dieselben Bezugszeichen für dieselben oder einander entsprechende Elemente der Erfindung verwendet.

Beschreibung der Ausführungsformen

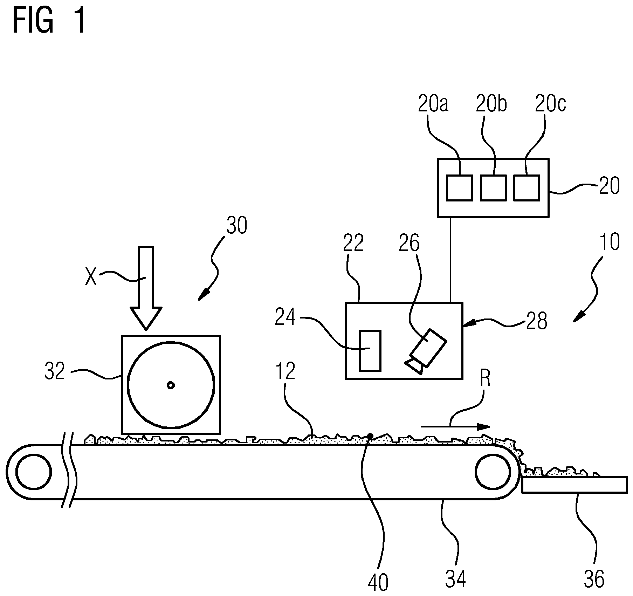

FIG 1 zeigt ein Beispiel eines Schüttgutproduktionssystems 10 mit einer Vorrichtung 20 zur Schüttgutanalyse und einer Vorrichtung 30 zur Schüttgutproduktion, insbesondere Pelletproduktion. Das aus Einsatzstoffen X produzierte Schüttgut 12, insbesondere Pellets, kann im vorliegenden Beispiel von einer hier als Pelletierteller ausgebildeten Produktionseinheit 32 der Vorrichtung 30 auf eine Transportvorrichtung 34 ausgeworfen werden. Gegebenenfalls können in Bezug auf eine Transportrichtung R der Transportvorrichtung 34 stromaufwärts der Produktionseinheit 32 auch weitere Produktionseinheiten (nicht gezeigt) vorgesehen sein, die dann das produzierte Schüttgut 12 ebenfalls auf die Transportvorrichtung 34 auswerfen. Mittels der Transportvorrichtung 34 lässt sich das produzierte Schüttgut 12 dann kontinuierlich abtransportieren, zum Beispiel bis zu einer Sortiervorrichtung 36. Dabei passiert das Schüttgut 12 zweckmäßigerweise eine Sensorik 28, die der Vorrichtung 20 zur Schüttgutanalyse zugeordnet sein kann. Die Eigenschaften des Schüttguts 12 können so grundsätzlich im Wesentlichen kontinuierlich und infolgedessen anhand des gesamten für die Sensorik 28 erfassbaren Schüttguts 12 ermittelt werden. Insbesondere kann so die Schüttgutproduktion online überwacht werden.

Die Vorrichtung 20 zur Schüttgutanalyse umfasst im vorliegenden Beispiel einen die Sensorik 28 bildenden Profilsensor 22 mit einer Projektionseinheit 24 und einer Kamera 26. Die Projektionseinheit 24, zum Beispiel ein Laser, ist zweckmäßigerweise zur Projektion einer Linie 40 quer zur Transportrichtung R (und daher in FIG 1 nur als Punkt dargestellt) auf das am Profilsensor 22 vorbei bewegte Schüttgut 12 eingerichtet. Die Kamera 26 ist dazu eingerichtet, die Verzerrungen dieser Linie 40 zu erfassen, die aus der Projektion auf das (unebene) Schüttgut 12 folgen. Insbesondere können so auch die Verzerrungen der Linie 40 erfasst werden, die sich durch das Fortbewegen des Schüttguts 12 am Profilsensor 22 vorbei ergeben. Aus den erfassten Verzerrungen kann die Vorrichtung 20, zum Beispiel mittels einer nicht dargestellten Datenverarbeitungseinheit, einen 3D-Datensatz erzeugen. Dieser 3D-Datensatz kann die Ausbildung des Schüttguts 12 auf der Kornebene abbilden, d. h. die Größe, Form und/oder relative Lage der einzelnen Körner bzw. Schüttgutkörper.

Die Vorrichtung 20 zur Schüttgutanalyse umfasst weiterhin ein Identifikationsmittel 20a zur Identifikation einzelner Schüttgutkörper des Schüttguts 12 in dem 3D-Datensatz und ein Rechenmittel 20b zum Durchführen einer Ausgleichsrechnung für jeden identifizierten Schüttgutkörper. Das Rechenmittel 20b ist dabei dazu eingerichtet, jeden identifizierten Schüttgutkörper auf Grundlage von Daten aus dem 3D-Datensatz, welche dem jeweiligen Schüttgutkörper zugeordnet sind, zu rekonstruieren. Zusätzlich ist ein Analysemittel 20c vorgesehen zum Ermitteln einer Schüttgutcharakteristik auf Grundlage von jeweils wenigstens einem bei den Ausgleichsrechnungen erhaltenen Parameterwert, der den jeweiligen identifizierten Schüttgutkörper charakterisiert.

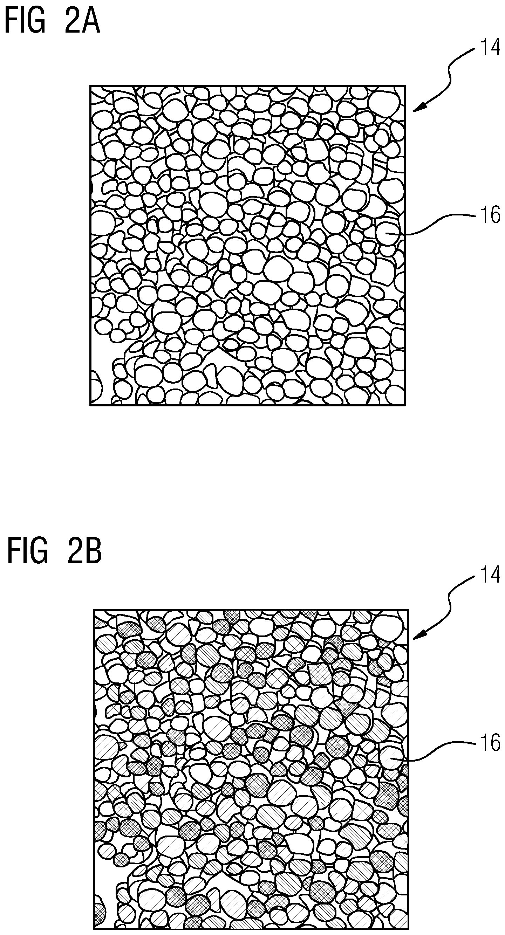

FIG 2A zeigt ein Beispiel eines 3D-Datensatzs 14 in einer zweidimensionalen Darstellung, in der einzelne Schüttgutkörper 16 erkennbar sind. Aus Gründen der Übersichtlichkeit ist nur einer der Schüttgutkörper 16 mit einem Bezugszeichen versehen. Der 3D-Datensatz 14 setzt sich dabei zweckmäßigerweise aus einer Vielzahl an Höhenprofilen zusammen, die jeweils entlang einer in Figur 2A horizontal verlaufenden Linie (vgl. Bezugszeichen 40 in FIG 1) aufgenommen wurden.

FIG 2B zeigt in dem 3D-Datensatz 14 aus FIG 2A identifizierte Schüttgutkörper 16, die in der gezeigten Darstellung durch unterschiedliche Schraffierungen kenntlich gemacht sind. Auch hier ist aus Gründen der Übersichtlichkeit lediglich einer der identifizierten Schüttgutkörper 16 mit einem Bezugszeichen gekennzeichnet. Die Identifikation der einzelnen Schüttgutkörper 16 aus dem 3D-Datensatz 14, welche auch als "Segmentierung" bezeichnet werden kann, erfolgt zweckmäßigerweise anhand der in Figur 2A gezeigten oder einer ähnlichen zweidimensionalen Darstellung des 3D-Datensatzes 14. Für die Identifikation können dann an sich bekannte konventionelle Algorithmen zur digitalen Bildverarbeitung eingesetzt werden.

Vorzugsweise werden bei der Identifikation jedem Schüttgutkörper 16 Daten aus dem 3D-Datensatz 14 zugeordnet. Mit diesen Daten ist zweckmäßigerweise zumindest ein Teil jedes einzelnen identifizierten Schüttgutkörpers 16 dreidimensional darstell- und/oder analysierbar.

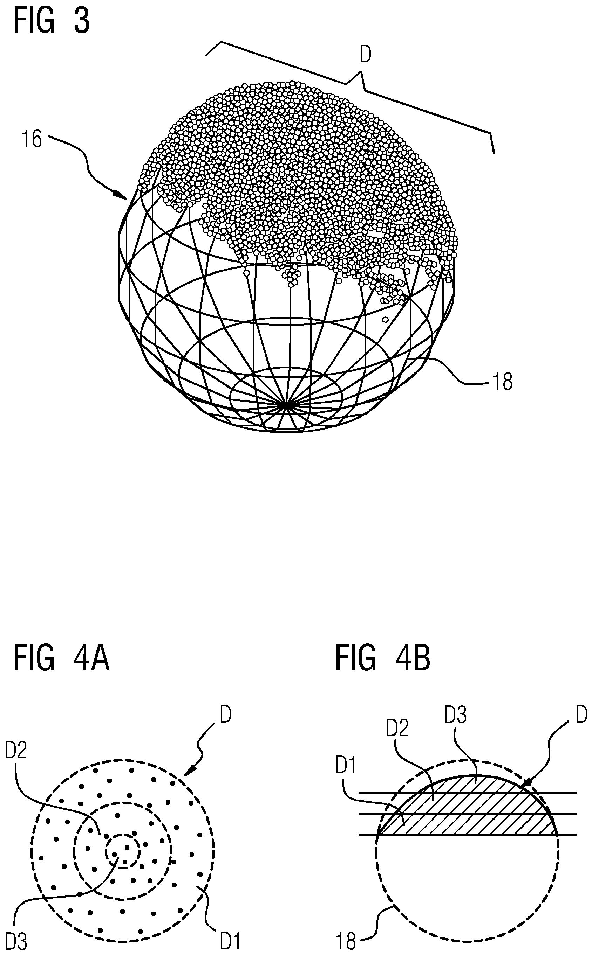

FIG 3 zeigt ein Beispiel einer Ausgleichsrechnung, bei der ein Schüttgutkörper 16 rekonstruiert wird. Dem Schüttgutkörper sind Daten D aus einem 3D-Datensatz zugeordnet. Diese Daten D können beispielsweise in Form einer Punktwolke vorliegen. Die einzelnen Datenpunkte der Punktwolke liegen dann zweckmäßigerweise im Bereich einer Oberfläche des Schüttgutkörpers 16, insbesondere innerhalb eines zum Beispiel von der Kamera 26 aus FIG 1 erfassbaren und nicht durch andere Schüttgutkörper abgeschatteten Abschnitts der Oberfläche. Die einzelnen Datenpunkte der Punktwolke können infolgedessen zumindest einen Teil der Oberfläche des Schüttgutkörpers 16 charakterisieren.

Für die Rekonstruktion des Schüttgutkörpers 16 wird zweckmäßigerweise ein vorbestimmter geometrischer Körper 18, im vorliegenden Beispiel ein sphärischen Körper, d. h. eine Kugel, an die Daten D angepasst. Beispielsweise können dabei Radius oder Durchmesser des Körpers 18 sowie dessen Lage im Raum, z. B. die Lage seines Mittelpunkts, an die Daten D angepasst werden, bis die Daten D im Bereich der Oberfläche des Körpers 18 liegen. Anders gesagt kann der geometrische Körper 18 an die Daten D angefittet werden. Der geometrische Körper 18 bildet infolgedessen zweckmäßigerweise ein Modell für den realen Schüttgutkörper 16. So ist eine, insbesondere dreidimensionale, (virtuelle) Rekonstruktion des Schüttgutkörpers 16 erhältlich.

Mathematisch wird bei der Ausgleichsrechnung eine Matrixgleichung aufgestellt und, zum Beispiel mittels der Methode der kleinsten (Fehler-) Quadrate, gelöst.

Wird, wie im vorliegenden Beispiel, der Ausgleichsrechnung ein sphärischer Körper mit dem Mittelpunkt $(x_0, y_0, z_0)$ in kartesischen Koordinaten und dem Radius r zugrunde gelegt, gilt

$$(x - x_0)^2 + (y - y_0)^2 + (z - z_0)^2 = r^2.$$

Nach Erweiterung und Umstellung lautet diese Gleichung

$$x^2 + y^2 + z^2 = 2xx_0 + 2yy_0 + 2zz_0 + r^2 - x_0^2 - y_0^2 - z_0^2.$$

Für $n$ Datenpunkte aus den Daten D lässt sich die Matrixgleichung

$$\vec{f} = A\vec{c}$$

aufstellen, wobei

$$\vec{f} = \begin{bmatrix} x_1^2 + y_1^2 + z_1^2 \\ x_2^2 + y_2^2 + z_2^2 \\ \vdots \\ x_n^2 + y_n^2 + z_n^2 \end{bmatrix}, \quad A = \begin{bmatrix} 2x_1 & 2y_1 & 2z_1 & 1 \\ 2x_2 & 2y_2 & 2z_2 & 1 \\ \vdots & \vdots & \vdots & \vdots \\ 2x_n & 2y_n & 2z_n & 1 \end{bmatrix}, \quad \vec{c} = \begin{bmatrix} x_0 \\ y_0 \\ z_0 \\ r^2 - x_0^2 - y_0^2 - z_0^2 \end{bmatrix}.$$

Die kartesischen Koordinaten $x_i$, $y_i$ und $z_i$ mit $i$ = 1,2, ..., $n$ und damit der Vektor / und die Matrix $A$ sind vollständig bekannt. Das Gleichungssystem lässt sich folglich lösen für $n \geq 4$. Vorzugsweise wird bei der Identifikation von Schüttgutkörpern 16 in einem 3D-Datensatz eine untere Grenze für die Anzahl der Datenpunkte, z. B. $n \geq 50$, gesetzt. Damit ist das Gleichungssystem $\vec{f}$ = $A\vec{c}$ sogar überbestimmt. Der Lösungsvektor $\vec{c}$ und damit Radius sowie Mittelpunkt des sphärischen Körpers 18 kann dann mithilfe der Methode der kleinsten (Fehler-) Quadrate berechnet werden.

FIG 4A zeigt ein Beispiel von in mehrere Datensets D1, D2, D3 aufgeteilten, einem Schüttgutkörper zugeordneten Daten D aus einem 3D-Datensatz. Wie in FIG 3 dargestellt, enthalten die Daten D eine Punktwolke aus mehreren Datenpunkten, die im Bereich einer Oberfläche des identifizierten Schüttgutkörpers liegen. Die Daten D bilden im vorliegenden Beispiel eine Kugelkappe des Schüttgutkörpers ab. In FIG 4A ist die Verteilung der Datenpunkte beim Blick senkrecht auf diese Kugelkappe dargestellt. Die Datenpunkte liegen aus diesem Blickwinkel innerhalb eines Kreises.

Die Datensets D1, D2, D3 enthalten in dieser Darstellung Datenpunkte aus Kreisringen dieses Kreises, die durch die gestrichelten Linien angedeutet sind. In drei Dimensionen entsprechen diese Kreisringe jeweils der Oberfläche einer Kugelschicht, d. h. einer sogenannten Kugelzone. Die Datensets D1, D2, D3 bilden infolgedessen jeweils eine Kugelzone des Schüttgutkörpers ab.

Wird, wie zum Beispiel in FIG 3 gezeigt, ein sphärischer Körper an die Daten D angepasst, kann aus den ermittelten mittleren Fehlern für die Abweichung der Datenpunkte jedes Datensets D1, D2, D3 von dem an die Daten D angepassten Körper eine Unrundheit des Schüttgutkörpers abgeleitet werden. Dies wird in FIG 4B deutlich:

FIG 4B zeigt die Daten D aus FIG 4A als durchgezogene Linie und einen an die Daten D angepassten sphärischen Körper 18 in einer Seitenansicht. Die Daten D bilden in dieser Ansicht ein durch Schraffur gekennzeichnetes Kreissegment, das gemäß der Datensets D1, D2, D3 in Schichten unterteilt ist. Die Abweichungen der Daten D vom Körper 18 nehmen zum Apex des Kreissegments hin zu. Die Verhältnisse der mittleren Abweichungen von Datenpunkten aus den einzelnen Datensets D1, D2, D3 zu dem Körper 18, d. h. die Verhältnisse der für die einzelnen Datensets D1, D2, D3 beim Anpassen des Körpers 18 an die Daten D ermittelten mittleren Fehler zueinander, charakterisieren die Unrundheit des realen Schüttgutkörpes.

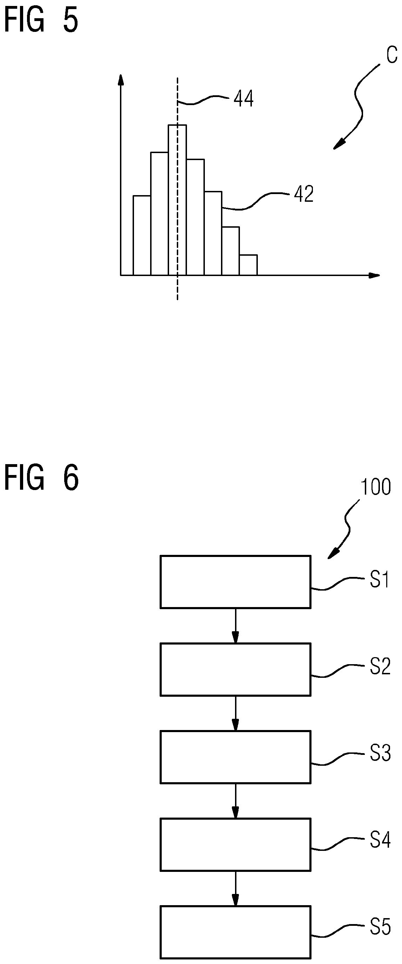

FIG 5 zeigt ein Beispiel einer Schüttgutcharakteristik C. Bei der Schüttgutcharakteristik C handelt es sich vorliegend rein beispielhaft um eine Verteilung 42 der Schüttgutkörper- oder Korngröße, d. h. der des Durchmessers der Schüttgutkörper eines Schüttguts. Diese Verteilung 42 lässt sich ermitteln, indem ein Histogramm aus allen ermittelten Durchmessern von in einem 3D-Datensatz identifizierten Schüttgutkörpern gebildet wird.

Grundsätzlich ist auch eine direkte Umrechnung einer Größenverteilung in eine Volumenverteilung möglich. Durch diese Umrechnung und Aufsummierung der einzelnen Schüttgutkörper-Volumina aus verschiedenen Größenbereichen lassen sich statistische Schüttgutwerte, ähnlich der Ergebnisse von Siebanalysen, ermitteln.

Die Schüttgutcharakteristik C kann neben der Verteilung 42 auch eine mittlere Schüttgutkörpergröße 44 enthalten, die FIG 5 als gestrichelte Linie eingezeichnet ist.

FIG 6 zeigt ein Beispiel eines Verfahrens 100 zur Schüttgutanalyse.

In einem Verfahrensschritt S1 wird ein einem Schüttgut zugeordneter 3D-Datensatz bereitgestellt. Dazu kann das Schüttgut im Verfahrensschritt S1 sensorisch erfasst werden, zum Beispiel mit einem Profilsensor.

In einem Verfahrensschritt S2 werden im 3D-Datensatz einzelne Schüttgutkörper des Schüttguts identifiziert.

Wie weiter oben im Zusammenhang mit FIG 2A, 2B erläutert, erfolgt dies zweckmäßigerweise in einer zweidimensionalen Darstellung des 3D-Datensatzes. Diese zweidimensionale Darstellung kann ebenfalls in Verfahrensschritt S2, neben der eigentlichen Identifikation der einzelnen Schüttgutkörper, erzeugt werden. Hierzu können beispielsweise Datenpunkte aus dem 3D-Datensatz in eine Ebene projiziert werden und hinsichtlich einer Höheninformation, d. h. ihrem Abstand zur Ebene, codiert werden. Anhand dieser Codierung können die Datenpunkte segmentiert und jeweils einem Schüttgutkörper zugeordnet werden.

In einem Verfahrensschritt S3 wird für jeden identifizierten Schüttgutkörper eine Ausgleichsrechnung durchgeführt. Bei dieser Ausgleichsrechnung wird der Schüttgutkörper auf Grundlage der ihm zugeordneten Daten aus dem 3D-Datensatz rekonstruiert. Beispielsweise kann ein geometrischer Körper, etwa eine Kugel, an die dem Schüttgutkörper zugeordneten Daten angepasst bzw. angefittet werden, wie dies weiter oben im Zusammenhang mit FIG 3 beschrieben ist. Bei dieser Ausgleichsrechnung lässt sich zweckmäßigerweise wenigstens ein den Schüttgutkörper charakterisierender Parameterwert ermitteln, zum Beispiel dessen Radius oder Durchmesser.

Alternativ oder zusätzlich kann in Verfahrensschritt S3 auch eine Unrundheit des Schüttgutkörpers als charakterisierender Parameterwert ermittelt werden. Dazu werden die Daten zweckmäßigerweise, wie weiter oben im Zusammenhang mit den Figuren 4A, 4B erläutert ist, in mehrere Datensets aufgeteilt und die mittleren Fehler, die sich bei der Ausgleichsrechnung für jedes dieser Datensets ergeben, ins Verhältnis gesetzt.

In einem Verfahrensschritt S4 wird aus jeweils wenigstens einem bei den Ausgleichsrechnungen erhaltenen Parameterwert, der den jeweiligen identifizierten Schüttgutkörper charakterisiert, eine Schüttgutcharakteristik abgeleitet. Beispielsweise kann eine Verteilung der bei den Ausgleichsrechnungen erhaltenen Parameterwerte ermittelt werden. Alternativ oder zusätzlich können die erhaltenen Parameterwerte zu einem Durchschnittswert gemittelt oder einem anderen statistischen Verfahren zugrunde gelegt werden. Grundsätzlich ist es denkbar, dass die Schüttgutcharakteristik mehrere solcher Verteilungen oder (Durchschnitts-) Werte enthält.

Zweckmäßigerweise wird die ermittelte Schüttgutcharakteristik in Verfahrensschritt S4 auch ausgegeben, zum Beispiel über eine entsprechende Schnittstelle. Die Schüttgutcharakteristik kann insbesondere an eine Anlagensteuerung ausgegeben werden, die zur Regelung eines Schüttgutproduktionssystems eingerichtet ist. Die Anlagensteuerung kann das Schüttgutproduktionssystem, insbesondere wenigstens eine Vorrichtung zur Schüttgutproduktion, in einem weiteren Verfahrensschritt S5 entsprechend auf Grundlage der ermittelten Schüttgutcharakteristik steuern, zum Beispiel Produktionsparameter ändern. Mithilfe einer derartigen Steuerung kann die Qualität des produzierten Schüttguts erhöht oder zuverlässig auf einem vorbestimmten Qualitätsniveau gehalten werden.

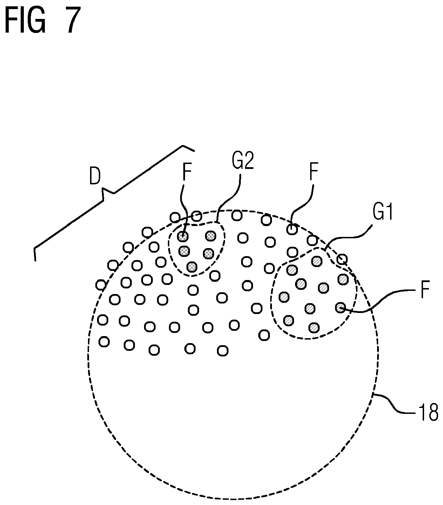

FIG 7 zeigt ein Beispiel von Gruppen G1, G2 von Fehlern F, die bei einer Ausgleichsrechnung zur Rekonstruktion eines Schüttgutkörpers erhalten wurden. Die Gruppierung erfolgt dabei auf Grundlage einer räumlichen Korrelation der Fehler F. Aus Gründen der Übersichtlichkeit sind nur einige Fehler F mit einem Bezugszeichen versehen.

Die Fehler F bilden im vorliegenden Beispiel die Abweichungen von einem Schüttgutkörper zugeordneten Daten D bzw. Datenpunkten aus einem 3D-Datensatz zu einem vorbestimmten geometrischen Körper 18 ab. Die Größe der Abweichung wird vorliegend durch die Schraffur dargestellt. Unschraffierte Punkte stellen kleine Fehler F, d. h. nur geringfügige positive oder negative Abweichungen, dar, während schräg schraffierte Punkte größere positive Abweichung und kreuzschraffierte Punkte größere negative Abweichungen darstellen. Eine positive Abweichung weisen dabei diejenigen Punkte auf, die außerhalb des geometrischen Körpers 18 liegen, während diejenigen Punkte, die innerhalb des geometrischen Körpers 18 liegen, eine negative Abweichung aufweisen.

Gemäß der rein beispielhaften Darstellung in FIG 7 liegt in einem Bereich des geometrischen Körpers 18 eine Häufung von größeren positiven Abweichungen und in einem anderen Bereich eine Häufung von größeren negativen Abweichungen vor. Die entsprechenden Fehler F sind gemäß der dieser räumlichen Korrelation zu den Gruppen G1 und G2 zusammengefasst.

Korrespondierend mit dieser Fehlergruppierung lassen sich auch die Daten D gruppieren. Anhand der Fehlergruppierung kann also nicht nur identifiziert werden, wie groß der Anteil der "abweichenden" Daten(-punkte) ist, sondern sogar im Detail, welche Daten(-punkte) signifikant von dem vorbestimmten geometrischen Körper 18 abweichen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

10   Schütttgutproduktionssystem
12   Schüttgut
14   3D-Datensatz
16   Schüttgutkörper

18      geometrischer Körper

20      Vorrichtung zur Schüttgutanalyse
20a     Identifikationsmittel
20b     Rechenmittel
20c     Analysemittel
22      Profilsensor
24      Projektionseinheit
26      Kamera
28      Sensorik

30      Vorrichtung zur Schüttgutproduktion
32      Produktionseinheit
34      Transportvorrichtung
36      Sortiervorrichtung

40      Linie
42      Verteilung
44      mittlere Schüttgutkörpergröße

100     Verfahren zur Schüttgutanalyse

S1      Bereitstellung 3D-Datensatz
S2      Identifikation von Schüttgutkörpern
S3      Ausgleichsrechnung
S4      Ermitteln einer Schüttgutcharakteristik
S5      Steuerung einer Schüttgutproduktion

C           Schüttgutcharakteristik
D           Daten
D1, D2, D3  Datenset
X           Einsatzstoff
R           Transportrichtung
F           Fehler
G1, G2      Gruppe

**Patentansprüche**

1.  Verfahren (100) zur Schüttgutanalyse, wobei

    - in einem 3D-Datensatz (14) einzelne Schüttgutkörper (16) eines Schüttguts (12) identifiziert werden (S2),
    - für jeden identifizierten Schüttgutkörper (16) eine Ausgleichsrechnung durchgeführt wird (S3), bei welcher der Schüttgutkörper (16) auf Grundlage von dem Schüttgutkörper (16) zugeordneten Daten (D) aus dem 3D-Datensatz (14) rekonstruiert wird, und
    - auf Grundlage von jeweils wenigstens einem bei den Ausgleichsrechnungen erhaltenen Parameterwert, der den jeweiligen identifizierten Schüttgutkörper (16) charakterisiert, eine Schüttgutcharakteristik (C) ermittelt wird (S4).

2.  Verfahren (100) nach Anspruch 1, wobei im Rahmen der Ausgleichsrechnung (S3) ein, insbesondere vorbestimmter, geometrischer Körper (18) an Daten (D) aus dem 3D-Datensatz (14), welche dem Schüttgutkörper (16) zugeordnet sind, angepasst wird.

3.  Verfahren (100) nach Anspruch 2, wobei im Rahmen der Ausgleichsrechnung (S3) ein sphärischer Körper an die dem jeweiligen Schüttgutkörper (16) zugeordneten Daten (D) angepasst wird.

4.  Verfahren (100) nach einem der vorangehenden Ansprüche, wobei ein den Schüttgutkörper (16) charakterisierender Parameterwert auf der Grundlage einer räumlichen Verteilung einer Vielzahl von Fehlern ermittelt wird, die für die dem Schüttgutkörper (14) zugeordnet Daten (D) aus dem 3D-Datensatz (14) im Rahmen der Ausgleichsrechnung ermitteltet werden.

5. Verfahren (100) nach Anspruch 4, wobei die Fehler auf Grundlage einer räumlichen Korrelation gruppiert werden und der den Schüttgutkörper (16) charakterisierende Parameterwert auf der Grundlage dieser Fehlergruppierung ermittelt wird.

6. Verfahren (100) nach einem der vorangehenden Ansprüche, wobei für die Ausgleichsrechnung (S3) auf Grundlage der dem jeweiligen Schüttgutkörper (16) zugeordneten Daten (D) eine Matrixgleichung aufgestellt und gelöst wird, sodass aus einem Lösungsvektor der Matrixgleichung wenigstens ein den jeweiligen Schüttgutkörper (16) charakterisierender Parameterwert ableitbar ist.

7. Verfahren (100) nach einem der vorangehenden Ansprüche, wobei der 3D-Datensatz (14) mittels eines Profilsensors (22) erzeugt wird, an dem das Schüttgut (12) mit bekannter Geschwindigkeit vorbeibewegt wird.

8. Verfahren (100) nach Anspruch 7, wobei ein Profil, insbesondere Höhenprofil, des am Profilsensor (22) vorbeibewegten Schüttguts (12) im Wesentlichen kontinuierlich erfasst und die Schüttgutcharakteristik (C) im Wesentlichen in Echtzeit ermittelt wird .

9. Verfahren (100) nach einem der vorangehenden Ansprüche, wobei sequentiell mehrere, jeweils innerhalb eines vorbestimmten Zeitintervalls aufgenommene 3D-Datensätze (14) ausgewertet werden.

10. Verfahren (100) nach einem der vorangehenden Ansprüche, wobei auf Grundlage der ermittelten Schüttgutcharakteristik (C) ein Schüttgutproduktionsprozess geregelt wird (S5).

11. Verfahren (100) nach einem der vorangehenden Ansprüche, wobei die Identifikation der einzelnen Schüttgutkörper (16) mithilfe einer künstlichen Intelligenz durchgeführt wird.

12. Verfahren (100) nach einem der vorangehenden Ansprüche, wobei die Schüttgutkörper Metallerzpellets für Direktreduktionsöfen sind und die Schüttgutcharakteristik im Rahmen der Pelletproduktion ermittelt wird.

13. Vorrichtung (20) zur Schüttgutanalyse, aufweisend

- ein Identifikationsmittel (20a) zur Identifikation einzelner Schüttgutkörper (16) eines Schüttguts (12) in einem 3D-Datensatz (14),
- ein Rechenmittel (20b) zum Durchführen einer Ausgleichsrechnung für jeden identifizierten Schüttgutkörper (16), bei welcher der Schüttgutkörper (16) auf Grundlage dem Schüttgutkörper (16) zugeordneten Daten (D) aus dem 3D-Datensatz (14) rekonstruiert wird, und
- ein Analysemittel (20c) zum Ermitteln einer Schüttgutcharakteristik (C) auf Grundlage von jeweils wenigstens einem bei den Ausgleichsrechnungen erhaltenen Parameterwert, der den jeweiligen identifizierten Schüttgutkörper (16) charakterisiert.

14. Schüttgutproduktionssystem (10), mit einer Vorrichtung (20) zur Schüttgutanalyse nach Anspruch 12 und einer Vorrichtung (30) zur Schüttgutproduktion.

15. Computerprogrammprodukt zur Ausführung eines Verfahrens (100) gemäß einem der Ansprüche 1 bis 12.

## FIG 1

FIG 2A

14

16

FIG 2B

14

16

## FIG 3

## FIG 4A

## FIG 4B

FIG 5

FIG 6

## FIG 7

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ANDERSSON T ET AL: "Pellet Size Estimation Using Spherical Fitting", INSTRUMENTATION AND MEASUREMENT TECHNOLOGY CONFERENCE PROCEEDINGS, 2007 IEEE, IEEE, PI, 1. Mai 2007 (2007-05-01), Seiten 1-5, XP031182214, DOI: 10.1109/IMTC.2007.379014 ISBN: 978-1-4244-0588-6 | 1-10, 12-15 | INV. G06T7/62 G06T7/00 |
| Y | * Zusammenfassung * <br> * Seite 1, linke Spalte, Absatz 1-5 * <br> * Seite 1, rechte Spalte, Absätze 1,3,4 * <br> * Seite 2, linke Spalte, Absätze 1,3,5,6,7,8 * <br> * Seite 2, rechte Spalte, Absatz 1-5 * <br> * Seite 3, linke Spalte, Absatz 1 * <br> * Seite 2, rechte Spalte, Absatz 1 * <br> * Tabelle 3 * <br> * Abbildungen 1-2 * <br> ----- | 7-12,14 | |
| Y | DEO ARYA JYOTI ET AL: "Machine Learning based Image Processing for Iron Ore Pellet Size Analysis", 2021 4TH BIENNIAL INTERNATIONAL CONFERENCE ON NASCENT TECHNOLOGIES IN ENGINEERING (ICNTE), IEEE, 15. Januar 2021 (2021-01-15), Seiten 1-5, XP033949168, DOI: 10.1109/ICNTE51185.2021.9487768 [gefunden am 2021-07-15] * Titel * <br> * Zusammenfassung * <br> * Seite 2, rechte Spalte, Absätze 1,2 * <br> * Seite 3, linke Spalte, Absatz 3 * <br> ----- <br> -/-- | 8,10-12, 14 | RECHERCHIERTE SACHGEBIETE (IPC) <br><br> G06T |

Der vorliegende Recherchenbericht wurde für alle Patentansprüche erstellt

| Recherchenort | Abschlußdatum der Recherche | Prüfer |
|---|---|---|
| München | 5. August 2024 | Dirscherl, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

**Nummer der Anmeldung**

EP 24 16 8202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | THURLEY ET AL: "An industrial 3D vision system for size measurement of iron ore green pellets using morphological image segmentation", MINERALS ENGINEERING, ELSEVIER, AMSTERDAM, NL, Bd. 21, Nr. 5, 21. Dezember 2007 (2007-12-21), Seiten 405-415, XP022542145, ISSN: 0892-6875, DOI: 10.1016/J.MINENG.2007.10.020 * Titel * * Zusammenfassung * * Seite 406, rechte Spalte, Absatz 3 * * Abbildung 1 * ----- | 7,9,10, 12,14 | |
| A | LAUCKA ANDRIUS ET AL: "Method for Volume of Irregular Shape Pellets Estimation Using 2D Imaging Measurement", APPLIED SCIENCES, Bd. 10, Nr. 8, 11. April 2020 (2020-04-11) , Seite 2650, XP093191303, ISSN: 2076-3417, DOI: 10.3390/app10082650 * das ganze Dokument * ----- | 1-15 | |
| A | WU XIN ET AL: "Online size distribution measurement of dense iron green pellets using an efficient and multiscale nested U-net method", POWDER TECHNOLOGY, Bd. 387, 24. April 2021 (2021-04-24), Seiten 584-600, XP093191699, Basel (CH) ISSN: 0032-5910, DOI: 10.1016/j.powtec.2021.04.045 * das ganze Dokument * ----- | 1-15 | |

RECHERCHIERTE SACHGEBIETE (IPC)

-/--

Der vorliegende Recherchenbericht wurde für alle Patentansprüche erstellt

| Recherchenort | Abschlußdatum der Recherche | Prüfer |
|---|---|---|
| München | 5. August 2024 | Dirscherl, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 2 von 3

Europäisches
Patentamt

European
Patent Office

Office européen
des brevets

**EUROPÄISCHER RECHERCHENBERICHT**

**Nummer der Anmeldung**

EP 24 16 8202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Andersson Tobias: "Estimating particle size distributions based on machine vision", <br><br>, <br>16. Dezember 2010 (2010-12-16), Seiten 1-218, XP093191664, <br>Gefunden im Internet: <br>URL:https://www.diva-portal.org/smash/get/diva2:991638/FULLTEXT01.pdf <br>[gefunden am 2024-08-01] <br>* das ganze Dokument * <br>----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 5. August 2024 | Dirscherl, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)